# EUROPÄISCHE PATENTSCHRIFT

(11) **EP 0 905 958 B1**
(45) Veröffentlichungstag und Bekanntmachung des Hinweises auf die Patenterteilung: **21.12.2005**
(21) Anmeldenummer: 98113730.0
(22) Anmeldetag: 23.07.1998
(51) Int. Cl.: H04M 3/54, H04M 7/00, H04Q 7/00, H04Q 7/38

(54) **Verfahren zur Signalisierung einer Anrufweiterleitung**
Method for signalling a call transfer
Méthode pour signaler un transfert d'appel

(30) Priorität: 30.09.1997 DE 19743112
(43) Veröffentlichungstag der Anmeldung: 31.03.1999
(73) Patentinhaber: Deutsche Telekom AG, 53113 Bonn (DE)
(72) Erfinder: Schrimpf, Werner, 53179 Bonn (DE)

(56) Entgegenhaltungen:
- EP-A- 0 676 884
- WO-A-95/31076
- GB-A- 2 305 817
- US-A- 5 555 290

## Beschreibung

Die Erfindung betrifft ein Verfahren zur Signalisierung einer Anrufweiterleitung von einem ersten Teilnehmeranschluß eines Telekommunikationsnetzes zu einem zweiten Teilnehmeranschluß eines beliebigen Telekommunikationsnetzes, vorzugsweise Mobilfunknetzes, wobei ein Anrufer den ersten Teilnehmeranschluß gewählt hat.

Mit der erfolgten Digitalisierung des Telefonnetzes beziehungsweise der Bereitstellung von ISDN-Diensten werden dem Telefonkunden neue Komfortmerkmale zur Verfügung gestellt. Eines der wichtigsten Komfortmerkmale ist die Möglichkeit der Anrufweiterleitung. Hierbei erhält der Telefonkunde beziehungsweise der Teilnehmer die Möglichkeit, über seinen heimischen Telefonanschluß beziehungsweise seinen Arbeitsplatzanschluß die Nummer eines Anrufzieles zu programmieren, an das eingehende Telefonanrufe weitergeleitet werden sollen. Die Anrufziele selbst können im Festnetz, im Mobilfunknetz oder in ausländischen Fest- oder Mobilfunknetzen liegen.

Insbesondere durch die steigende Verbreitung von Mobilfunktelefonie wird von Teilnehmern zunehmend häufiger von der Möglichkeit Gebrauch gemacht, eingehende Anrufe von einem Festnetzanschluß auf einen Mobilfunkanschluß umzuleiten. Dadurch ist der Teilnehmer auch bei Abwesenheit von zuhause beziehungsweise seinem Arbeitsplatz erreichbar.

Der Nachteil der Anrufweiterleitung ist für den angerufenen Teilnehmer darin zu sehen, daß er die Telefongebühren bezahlen muß, die für die Anrufweiterleitung, das heißt für die Verbindung zwischen dem angewählten Anschluß und dem Zielanschluß der Anrufweiterleitung, entstehen. Insbesondere bei der Anrufweiterleitung von einem Festnetzanschluß in ein Mobilfunknetz sind die vom angerufenen Teilnehmer zu tragenden Gebühren sehr hoch.

Als Anrufweiterleitung ist im Zusammenhang mit dieser Erfindung auch eine Weiterleitung von einem nationalen Mobilfunknetz in ein ausländisches Mobilfunknetz zu verstehen (als sogenanntes Roaming bezeichnet). Auch in diesem Fall muß der angerufene Teilnehmer jene Gebühren tragen, die für die Verbindung zwischen den beiden Mobilfunknetzen entstehen.

Aus rechtlicher Sicht ist die Belastung des Anrufers mit den Gesamtkosten momentan, daß heißt mit den vorhandenen technischen Einrichtungen, nicht zulässig. Aus rechtlichen Gründen ist die Belastung des Anrufers mit den Gesamtkosten nicht zulässig. Der Anrufer muß anhand der gewählten Rufnummern erkennen können, mit welcher Gebührenbelastung er zu rechnen hat.

Dokument EP 0 676 884 offenbart ein Verfahren für eine Anrufweiterleitung, in der dem Anrufer mitgeteilt wird, ob er bereits ist, die Kosten für die Anrufweiterleitung anzunehmen wird.

Die Aufgabe der Erfindung besteht demgemäß darin, ein Verfahren anzugeben, mit dem es möglich wird, im Falle einer Anrufweiterleitung die Gesamtkosten der Verbindung dem Anrufer aufzuerlegen, ohne den vom Gesetzgeber gesteckten Rahmen zu verlassen

Diese Aufgabe wird durch ein Verfahren gelöst, das die Merkmale des Anspruchs 1 aufweist. Dadurch, daß der Anrufer durch die Anrufweiterleitung einen Hinweis über die Anrufweiterleitung erhält, ist es rechtlich möglich, den Anrufer mit den gesamten Gebühren zu belasten. Durch den Hinweis ist es dem Anrufer nämlich möglich, die Verbindung zu beenden, bevor sein Anruf weitergeleitet wird, beziehungsweise kann sich in seinem Telefonierverhalten auf diese höheren Gebühren einstellen.

In einer vorteilhaften Weiterbildung der Erfindung umfaßt der Hinweis Informationen über die Verbindungsgebühren zwischen dem ersten und dem zweiten Teilnehmeranschluß. Hiermit erhält der Anrufer eine zusätzliche Entscheidungshilfe darüber, ob er die Verbindung aufrechterhalten soll. Befindet sich beispielsweise der zweite Teilnehmeranschluß, das heißt das Anrufweiterleitungsziel, im gleichen Ortsnetz wie der angewählte erste Teilnehmeranschluß, so fällt lediglich eine weitere Ortsnetz-Gebühr an, so daß der Anrufer durch diese Anrufweiterleitung kaum zusätzlich belastet würde. Befindet sich der zweite Teilnehmeranschluß jedoch in einem ausländischen Telekommunikationsnetz, so wären die Gebühren, die der Anrufer zu tragen hätte, beträchtlich, so daß er in diesem Fall die Verbindung unterbrechen, beziehungsweise sich in seinem Telefonierverhalten auf diese höheren Gebühren einstellen kann. Obgleich also in beiden Fällen eine Anrufweiterleitung programmiert ist, ergäben sich für den Anrufer -bei Belastung mit den Gesamtgebührendeutlich unterschiedliche Beträge.

In einer vorteilhaften Weiterbildung der Erfindung wird zwischen dem Hinweis und der Anrufweiterleitung eine vorbestimmte Zeitdauer abgewartet. Es ergibt sich dadurch der Vorteil, daß dem Anrufer eine gewisse Zeit zur Entscheidung, ob er die Verbindung abbrechen soll oder nicht, zur Verfügung steht. Vorzugsweise kann das Ende dieser Zeitdauer, beispielsweise durch ein akustisches Signal, signalisiert werden.

In einer vorteilhaften Weiterbildung der Erfindung ist die Signalisierungsfunktion vom ersten Teilnehmeranslchluß aus aktivierbar. Damit hat der Teilnehmer die Möglichkeit und den Vorteil, Einfluß darauf zu nehmen, wer die für die Anrufweiterleitung anfallenden Gebühren zu tragen hat.

In einer vorteilhaften Weiterbildung der Erfindung wird der Hinweis mittels Sprache an den Anrufer übermittelt. Dies hat den Vorteil, daß das Telefon des Anrufers nicht notwendigerweise eine optische Anzeigevorrichtung aufweisen muß. Darüber hinaus ist die Signalisierung mittels Sprache für jeden Anrufer sehr einfach zu verstehen. Andere akustische Signalisierungsformen, beispielsweise bestimmte Abfolgen von Tönen, sind für den Anrufer nicht selbsterklärend; vielmehr bedarf es des Studiums der entsprechenden Bedienungsanleitungen.

In einer vorteilhaften Weiterbildung der Erfindung enthält der Hinweis genaue Informationen über den Gebührentarif, der auf der Grundlage der beiden Teilnehmeranschlüsse berechnet wird.

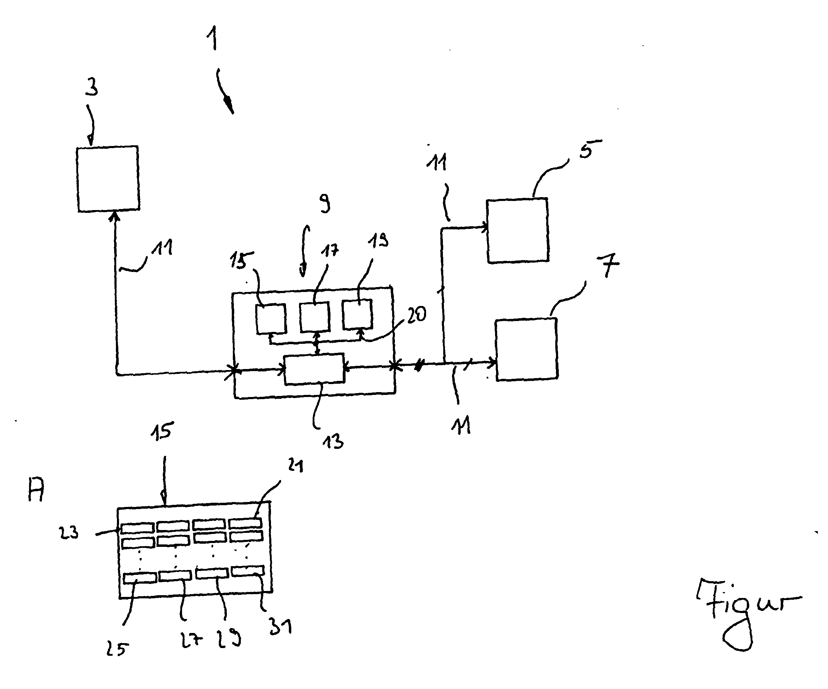

Weitere Ausgestaltungen der Erfindung ergeben sich aus der Beschreibung und der Zeichnung.

Die Erfindung wird nun anhand eines Ausführungsbeispiels mit Bezug auf die Zeichnung näher beschrieben. Dabei zeigt die einzige Figur ein Funktionsblockdiagramm des Systems zur Erläuterung des erfindungsgemäßen Verfahrens.

In der Figur ist mit dem Bezugszeichen 1 ein beispielhaft angedeutetes Telekommunikationsnetz gekennzeichnet. Der Übersichtlichkeit wegen enthält dieses Telekommunikationsnetz lediglich jene Komponenten, die zur Erläuterung der Erfindung notwendig sind.

Zu diesen Komponenten gehören insgesamt drei Teilnehmeranschlüsse 3, 5 und 7 sowie eine Vermittlungsstelle 9. Alle drei Teilnehmeranschlüsse 3, 5, 7 sind über Leitungen 11, die im Zusammenhang mit dieser Erfindung drahtgebundene oder Funk-Verbindungen bereitstellen, mit der Vermittlungsstelle 9 verbunden. Selbstverständlich ist es denkbar, daß die Verbindungen der Teilnehmeranschlüsse 3, 5, 7 mit der Vermittlungsstelle 9 über weitere nicht dargestellte Vermittlungsstellen erfolgen.

Bei dem im vorliegenden Ausführungsbeispiel beschriebenen Fall handelt es sich bei dem Teilnehmeranschluß 7 beispielsweise um einen Mobilfunkteilnehmeranschluß, so daß in der Übertragungsstrecke zur Vermittlungsstelle 9 auf jeden Fall eine weitere Vermittlungsstelle eingebunden ist, die als Verbindungsglied zwischen dem drahtgebundenen Festnetz und dem Mobilfunknetz dient. Bei den beiden Teilnehmeranschlüssen 3, 5 handelt es sich beispielsweise um übliche Festnetztelefone.

Die in der Figur gezeigte Vermittlungsstelle 9 weist unter anderem eine Vermittlungssteuerung 13, sowie einen Datenspeicher 15, ein Sprachmodul 17 und ein Gebührenberechnungsmodul 19 auf. Der Datenspeicher 15, das Sprachmodul 17 und das Gebührenberechnungsmodul 19 sind beispielsweise über einen Datenbus 20 mit der Vermittlungssteuerung 13 verbunden. Darüber hinaus sind die in der Figur angegebenen Teilnehmeranschlüsse 3, 5, 7 ebenfalls mit der Vermittlungssteuerung 13 verbunden.

Der Vermittlungssteuerung 13 kommt die Aufgabe zu, eine Verbindung zwischen dem Anrufer, beispielsweise Teilnehmeranschluß 3, und dem gewünschten Teilnehmer, beispielsweise Teilnehmeranschluß 5, herzustellen, wobei zur Identifizierung des gewünschten Teilnehmers 5 eine Telefonnummer dient.

Die Vermittlungsstelle 9 bietet darüber hinaus Teilnehmern die Möglichkeit, eine Anrufweiterleitung zu aktivieren. Hierzu ist es notwendig, daß der Teilnehmer über sein Telefon diesen Dienst auswählt und eine Zielnummer eingibt, an die alle an ihn gerichteten Anrufe weitergeleitet werden sollen. Die zur Anrufweiterleitung notwendigen Daten werden in der Vermittlungsstelle 9 im Datenspeicher 15 abgespeichert. Dieser Datenspeicher 15 ist, wie in der vergrößerten Darstellung A zu erkennen, matrixförmig organisiert. Jede Zelle 21 dieses matrixförmigen Aufbaus entspricht einer Speicherzelle des Datenspeichers 15. Jeder Zeile 23 des matrixförmigen Aufbaus ist ein Teilnehmeranschluß 3, 5, 7 zugeordnet. Das heißt, daß die Anzahl der Zeilen 23 zumindest der Anzahl der an die Vermittlungsstelle 9 angeschlossenen Teilnehmeranschlüsse entspricht. Zur Identifizierung jeder Zeile 23 ist beispielsweise in einer ersten Speicherzelle 25 einer Zeile 23 die Telefonnummer des Teilnehmeranschlusses abgespeichert. In den drei weiteren Speicherzellen 27, 29, 31 einer Zeile 23 sind beispielsweise die Informationen Umleitungsziel, Gebührentarif und Information ja/nein abgespeichert. Die Funktion dieser Werte soll später noch ausführlich beschrieben werden.

Hat ein Teilnehmer eine Anrufweiterleitung aktiviert, so wird die Zielnummer in der Speicherzelle 27 der dem Teilnehmeranschluß zugeordneten Zeile 23 abgelegt.

Zur Erläuterung des erfindungsgemäßen Verfahrens wird nun davon ausgegangen, daß der Teilnehmeranschluß 3 als Anrufer dient und einen Anruf tätigt, der den Teilnehmeranschluß 5 erreichen soll. Der Teilnehmeranschluß 5 hat seinerseits eine Anrufweiterleitung aktiviert und als Zielnummer die Telefonnummer des Teilnehmeranschlusses 7 eingegeben. Diese Telefonnummer des Teilnehmeranschlusses 7 steht folglich in der Speicherzelle 27, die dem Teilnehmeranschluß 5 zugeordnet ist.

Erreicht der Anrufwunsch des Teilnehmeranschlusses 3 die Vermittlungsstelle 9 und dort die Vermittlungssteuerung 13, so wird der Datenspeicher 15 nach einer Nummer in den Speicherzellen 25 durchsucht, die der vom Teilnehmeranschluß 3 gewählten Nummer entspricht.

Hat die Vermittlungssteuerung 13 einen entsprechenden Eintrag in einer Speicherzelle 25 gefunden und enthält die Speicherzelle 27 nun eine Information, ist die Anrufweiterleitung aktiviert, so daß die Vermittlungsstelle 9 nicht die Verbindung mit dem Teilnehmeranschluß 5, sondern vielmehr mit dem Teilnehmeranschluß 7 herstellt.

Erfindungsgemäß wird jedoch vor der Herstellung der Verbindung mit dem Teilnehmeranschluß 7 dem Teilnehmeranschluß 3 signalisiert, daß eine Anrufweiterleitung erfolgt. Diesen Signalisierungs-Dienst kann der Teilnehmeranschluß 5 mit der Aktivierung der Anrufweiterleitung auswählen, wobei diese Information beispielsweise in Form eines Flags in der Speicherzelle 31 abgelegt ist.

Erkennt die Vermittlungssteuerung 13 ein solches gesetztes Flag in der Speicherzelle 31, steuert sie das Sprachmodul 17 entsprechend an, das in gesprochener Sprache einen vorbestimmten Hinweistext an den Teilnehmeranschluß 3 übermittelt. Die Art dieses Hinweistextes ist vorzugsweise ebenfalls von dem Teilnehmeranschluß 5 vorgebbar und als entsprechende Information in der Speicherzelle 31 abgelegt. Dieser Hinweistext kann beispielsweise wie folgt lauten: "Die von Ihnen angewählte Rufnummer ist auf einen anderen Anschluß weitergeleitet".

Bisher wurden die für die Weiterleitung entstandenen Gebühren dem Teilnehmeranschluß 5, der die Anrufweiterleitung aktiviert hat, berechnet. Mit Hilfe des erfindungsgemäßen Verfahrens ist es nun möglich, bei der Anrufweiterleitung der Vermittlungsstelle 9 und damit dem Netzbetreiber mitzuteilen, daß die Gebühren vollständig vom Anrufer zu tragen sind. Hierzu wird wiederum ein Flag in der Speicherzelle 31 gesetzt. Erkennt die Vermittlungssteuerung 13 ein solches gesetztes Flag, wird zusätzlich der Hinweis mittels des Sprachmoduls 17 an den anrufenden Teilnehmeranschluß 3 übermittelt, daß die Gebühren vom Anrufer zu tragen sind.

Nach Erhalt dieses Hinweises hat der Teilnehmeranschluß 3 die Möglichkeit, die Verbindung zu unterbrechen, um nicht mit möglicherweise hohen Weiterleitungsgebühren belastet zu werden, beziehungsweise kann sich in seinem Telefonierverhalten auf diese höheren Gebühren einstellen. Sofern der Teilnehmeranschluß 3 die Verbindung noch vor der. Herstellung der Verbindung mit dem Teilnehmeranschluß 7 beendet hat, sind damit also keine zusätzlichen Gebühren für die Weiterleitung entstanden. Um dem Teilnehmeranschluß 3 zu signalisieren, daß nun die Verbindung mit dem Teilnehmeranschluß 7 hergestellt wird, ist beispielsweise ein akustishes Tonsignal denkbar, das an den Teilnehmeranschluß 3 übermittelt wird. Alternativ ist es denkbar, daß der Anrufer beispielsweise per Tastendruck an seinem Telefon die Weiterleitung unterbindet und gleichzeitig eine Sprachaufzeichnung (Anrufbeantworter) startet, die der Aufzeichnung einer kurzen Nachricht, beispielsweise "Bitte um Rückruf / Telefon-Nummer ..." dient. Selbstverständlich könnte die Generierung diese Nachricht mit der entsprechenden Telefonnummer des Anrufers mittels eines Tastendrucks auch automatisch erfolgen.

In den dem Anrufer übermittelten Hinweis auf die Weiterleitung des Anrufs läßt sich darüber hinaus eine Information aufnehmen, die einen Hinweis auf den Gebührentarif gibt, der für die Weiterleitung des Anrufs zur Geltung käme. Ein solcher Hinweis könnte beispielsweise wie folgt aussehen: "Die von Ihnen gewählte Rufnummer ist derzeit auf einen Anschluß im Fernbereich (beispielsweise Regio, Ausland/Europa, Mobilfunknetz) weitergeleitet. Die zusätzlichen Gebühren werden während dieser Verbindung berechnet". Diese Information läßt sich beispielsweise durch das Gebührenberechnungsmodul aus der Nummer des Teilnehmeranschlusses 5 und der Zielnummer des Teilnehmeranschlusses 7 berechnen. Diese Art von Hinweis gibt dem anrufenden Teilnehmeranschluß 3 eine sehr gute Grundlage für die Entscheidung, ob die Verbindung aufrechterhalten oder abgebrochen werden soll. Entscheidet sich der Teilnehmeranschluß 3 für eine Aufrechterhaltung der Verbindung, so werden ihm die gesamten Kosten der Verbindung belastet. Unterbricht er jedoch die Verbindung, so sind lediglich die ihm bekannten Kosten zur Herstellung einer Verbindung mit der Vermittlungsstelle 9 entstanden.

Dieses Verfahren ist sowohl bei der Weiterleitung von Anrufen innerhalb eines Telekommunikationsnetzes als auch zwischen unterschiedlichen Telekommunikationsnetzen, beispielsweise GSM 900 und GSM 1800 Netzen, möglich. Denkbar ist beispielsweise eine Anrufweiterleitung von einem Festnetz zu einem Mobilfunkteilnehmer, der sich momentan im Ausland befindet. In diesem Fall könnte der Anrufer den Hinweis erhalten, daß sich der Mobilfunkteilnehmer momentan im Ausland befindet und daß die zusätzlichen Kosten in Höhe von DM xxx pro Minute dem Anrufer belastet werden. Da die Vermittlungsstellen des Festnetzes in diesem Fall nicht über alle Informationen verfügen, erfolgt der Hinweis in mehreren Schritten, die im folgenden kurz dargestellt sind:
- Anrufer wählt Festnetz-Nummer des Anrufzieles;
- Vermittlungsstelle beziehungsweise "intelligentes Netz" des Festnetzbetreibers erkennt die Anrufweiterleitung zum Mobilfunkbetreiber und generiert beispielsweise den Ansagetext: "Die gewünschte Zielrufnummer wurde in das xy-Mobilfunknetz weitergeleitet. Es fallen zusätzliche Gebühren von xy-DM pro Minute an ...";
- anschließend erfolgt die Weitervermittlung zu dem jeweiligen Mobilfunkbetreiber.
- Der Mobilfunkbetreiber erkennt vor Aufbau der Verbindung zum ausländischen Mobilfunknetz die aktivierte Funktion "Gebührenübernahme durch Anrufer bei Roaming" und generiert folgenden Ansagetext: "Ihr gewünschter Gesprächspartner befindet sich derzeit in einem ausländischen Mobilfunknetz. Es fallen neben den xy-Gebühren weitere Auslandsgebühren von xy-DM pro Minute an ...".
- Die jeweiligen, gesamten Gebühren (Festnetzgebühr, nationale Mobilfunkgebühr, Roaminganteil für ausländischen Mobilfunkbetreiber) werden dem Anrufer belastet.

Besonders vorteilhaft ist das erfindungsgemäße Verfahren dann, wenn der Teilnehmeranschluß, der die Anrufweiterleitung aktiviert, die Möglichkeit hat, zwischen dem herkömmlichen und dem neuen Gebührensystem, bei dem die gesamten Kosten dem Anrufer belastet werden, auszuwählen.

Selbstverständlich sind andere Hinweistexte und weitergehende Informationen denkbar. Um den Anrufer mit den zusätzlichen Gebühren für die Weiterleitung seines Anrufes belasten zu können, ist es lediglich notwendig, den Anrufer darüber in irgendeiner Form zu informieren. Dies wird in vorteilhafter Weise durch das erfindungsgemäße Verfahren erreicht.

Selbstverständlich ist das erfindungsgemäße Verfahren auch anwendbar, wenn in Zukunft beispielsweise eine einheitliche Telefonnummer sowohl für den Festnetzanschluß als auch für den Mobilfunkanschluß eines Teilnehmers vergeben wird. In einem solchen Fall wird zunächst versucht, eine Verbindung mit dem Festnetzanschluß herzustellen. Gelingt das nicht, wird automatisch eine Anrufweiterleitung zum Mobilfunkanschluß durchgeführt. Vor der Weiterleitung erhält der Anrufer allerdings die Informationen, die zuvor beschrieben wurden. Der einzige Unterschied zu dem vorgenannten Ausführungsbeispiel liegt darin, daß der Teilnehmer die Rufnummer für die Anrufweiterleitung nicht einprogrammieren muß.

## Patentansprüche

1. Verfahren zur Signalisierung einer Anrufweiterleitung von einem ersten Teilnehmeranschluß eines Telekommunikationsnetzes zu einem zweiten Teilnehmeranschluß eines beliebigen Telekommunikationsnetzes, vorzugsweise Mobilfunknetzes, wobei ein Anrufer den ersten Teilnehmeranschluß gewählt hat, wobei vor der Herstellung einer Verbindung zwischen dem Anrufer (3) und dem zweiten Teilnehmeranschluß (7) ein Hinweis auf die Anrufweiterleitung dem Anrufer übermittelt wird, **dadurch gekennzeichnet, daß** der Hinweis auf der Grundlage der beiden Teilnehmeranschlüsse und dem sich hieraus ergebenden Gebührentarif berechnet wird.

2. Verfahren nach Anspruch 1, **dadurch gekennzeichnet, daß** der Hinweis über die Anrufweiterleitung Informationen über die Verbindungsgebühren zwischen dem ersten (5) und dem zweiten Teilnehmeranschluß (7) enthält.

3. Verfahren nach Anspruch 1 oder 2, **dadurch gekennzeichnet, daß** zwischen dem Hinweis und der Anrufweiterleitung eine vorbestimmte Zeitdauer abgewartet wird.

4. Verfahren nach einem der vorhergehenden Ansprüche, **dadurch gekennzeichnet, daß** die Signalisierungsfunktion vom ersten Teilnehmeranschluß (5) aus aktivierbar ist.

5. Verfahren nach einem der vorhergehenden Ansprüche, **dadurch gekennzeichnet, daß** der Hinweis mittels Sprache an den Anrufer übermittelt wird.

6. Verfahren nach einem der vorhergehenden Ansprüche, **dadurch gekennzeichnet, daß** der Hinweis zusätzlich die Information enthält, daß der Anrufer die gesamten Gebühren trägt.

## Claims

1. Method for signaling the forwarding of a call from a first subscriber line of a telecommunications network to a second subscriber line of any given telecommunications network, preferably a cellular network, wherein a calling party has dialed the first subscriber line, wherein a notification of the call forwarding is transmitted to the caller before setup of a connection between the caller (3) and the second subscriber line (7), **characterized in that** the notification is calculated on the basis of the two subscriber lines and the resultant charge rate.

2. Method according to claim 1, **characterized in that** the notification of the call forwarding contains information on the connection charges between the first subscriber line (5) and second subscriber line (7).

3. Method according to any one of claims 1 or 2, **characterized in that** a predetermined time period is allowed to elapse between the notification and the call forwarding.

4. Method according to any one of the preceding claims, **characterized in that** the signaling function can be activated from the first subscriber line (5).

5. Method according to any one of the preceding claims, **characterized in that** the notification is communicated to the calling party by means of speech.

6. Method according to any one of the preceding claims, **characterized in that** the notification also contains the information that the calling party is responsible for all of the charges.

## Revendications

1. Procédé destiné à la signalisation d'un renvoi d'appel d'un premier raccordement d'abonné d'un réseau de télécommunications vers un deuxième raccordement d'abonné d'un réseau de télécommunications quelconque, de préférence un réseau de radiocommunications avec les mobiles, un appelant ayant composé le numéro du premier raccordement d'abonné, un avertissement concernant le renvoi d'appel étant communiqué à l'appelant avant l'établissement d'une communication entre l'appelant (3) et le deuxième raccordement d'abonné (7), **caractérisé en ce que** l'avertissement est facturé sur la base des deux raccordements d'abonné et des tarifs en découlant.

2. Procédé selon la revendication 1, **caractérisé en ce que** l'avertissement concernant le renvoi d'appel contient des informations sur le tarif de la communication entre le premier (5) et le deuxième (7) raccordement d'abonné.

3. Procédé selon la revendication 1 ou 2, **caractérisé en ce qu'**une durée déterminée s'écoule entre l'avertissement et le renvoi d'appel.

4. Procédé selon l'une des revendications précédentes, **caractérisé en ce que** la fonction de signalisation peut être activée à partir du premier raccordement d'abonné (5).

5. Procédé selon l'une des revendications précédentes, **caractérisé en ce que** l'avertissement est communiqué à l'appelant par la parole.

6. Procédé selon l'une des revendications précédentes, **caractérisé en ce que** l'avertissement contient l'information supplémentaire que la totalité des redevances est à la charge de l'appelant.
